# EUROPÄISCHE PATENTSCHRIFT

(11) **EP 1 207 336 B1**
(45) Veröffentlichungstag und Bekanntmachung des Hinweises auf die Patenterteilung: **20.12.2006**
(21) Anmeldenummer: 01125608.8
(22) Anmeldetag: 26.10.2001
(51) Int. Cl.: F16M 11/04, G02B 7/00

(54) **Stativ mit Parallelogrammträger und Balanciermechanismus**
Stand with supporting parallelogram and balancing device
Support à parallélogramme porteur et dispositif d'équilibrage

(30) Priorität: 12.11.2000 DE 20019106 U
(43) Veröffentlichungstag der Anmeldung: 22.05.2002
(73) Patentinhaber: Leica Microsystems (Schweiz) AG, 9435 Heerbrugg (CH)
(72) Erfinder: Metelski, Andrzej, 8590 Romanshorn (CH)
(74) Vertreter: Reichert, Werner Franz

(56) Entgegenhaltungen:
- WO-A-97/47240
- DE-U- 20 019 105
- DE-U- 20 019 106
- DE-U- 20 019 107
- DE-U- 20 019 109
- US-A- 5 528 417
- US-A- 5 667 186
- US-A- 6 129 319
- PATENT ABSTRACTS OF JAPAN vol. 016, no. 421 (P-1414), 4. September 1992 (1992-09-04) & JP 04 142507 A (TOPCON CORP), 15. Mai 1992 (1992-05-15)

## Beschreibung

Die Erfindung betrifft ein ausbalancierbares Stativ gemäss dem Oberbegriff des Patentanspruches 1.

Stative mit elektronischen Balanciermechanismen verfügen über Messeinheiten, die eine Unbalance messen. Solche Messeinheiten sind beispielsweise im US-Patent US 5528417, in den DE 4320443 A1 und DE 4334069 A1 und in der WO 97/13997 der Anmelderin veröffentlicht. Die bekannten Messeinheiten messen häufig Biegekräfte oder sich durch Biegung ergebende Wege bei eingebremstem Stativ. Gegebenfalls verwenden Sie Winkelsensoren, optische Positionssensoren oder Biegesensoren. Unter eingebremstem Stativ ist ein Stativ zu verstehen, von dem wenigstens ein Tragarm mittels Bremse gegenüber dem Ständer schwenkfrei gehalten ist. In der Praxis werden solche Bremsen in der Regel zwischen ständerfesten Punkten und Parallelogrammträgern oder zwischen benachbarten Armen eines Parallelogrammträgers angeordnet.

Aus der JP 04 142 507 A und dem zugehörigen Patent Abstract of Japan Band 016 Nr. 421 (P-1414) ist ein Stativ mit einem lasttragenden Parallelogrammträger bekannt. Der Parallelogrammträger weist drei Tragarme auf, von denen zwei parallel zueinander angeordnet sind und der dritte Tragarm als verstellbare Feder ausgebildet ist. Ferner ist eine Messeinheit mit einem Sensor zur Messung von Kräften vorgesehen, die entsprechende Messwerte an eine Balanciersteuerung abgibt und über einen motorischen Antrieb die Federvorspannung des dritten Tragarms verändert.

Der Erfindung liegt die Aufgabe zugrunde, eine neue Generation von Messeinheiten zu schaffen, die mit besonders preisgünstigen, vorhandenen Sensoren realisiert und möglichst einfach montiert und/oder in Stativbauteile integriert werden kann.

Gelöst wird diese Aufgabe durch die im Kennzeichen des Anspruchs 1 angegebenen Merkmale.

Im Bereich eines der parallelen Tragarme des Parallelogrammträgers, vorzugsweise an einem der beiden horizontalen Tragarme, wird ein Druckkraft-, Scherkraft- oder Knicksensor angeordnet, der zwischen einem mit der Last verbundenen Teil des Tragarms und einem eingebremsten Teil des Stativs Kräfte misst und die Messwerte für die Balanciersteuerung zur Verfügung stellt.

Dabei werden folgende Kriterien erfüllt, bzw. folgende Gesetzmässigkeiten ausgenützt:
a) Der Tragarm wird bremsfrei gehalten. Daraus folgt, dass im Fall einer Ausbalancierung die Last am gewählten Ort verbleibt.
   Ist der Tragarm jedoch nicht ausbalanciert, so driftet die Last tendenziell vom gewählten Ort weg.
b) Parallel zu wenigstens einem der Träger bzw. an einem Träger des Parallelogrammträgers ist ein Sensor vorgesehen, der dieses Driften detektiert.
c) Das gemessene Driftverhalten steuert die Ausbalancierung.

Als artverwandte Variante wird alternativ direkt in einen der Träger des Parallelogramms ein Sensor eingebaut, der die dort auftretenden Knick- oder Scherkräfte misst. Durch die Integration eines Sensors in eine geschwächte oder unterbrochene Stelle eines Tragarmes eines Parallelogrammträgers ist zum einen eine gute integrative Lösung gefunden, die Platz spart. Zum anderen wird jedoch die Messung an einen Ort verlegt, der bei jedem Stativ mit Parallelogrammträgern vorhanden ist. Somit kann die Messeinheit selbst als Standardprodukt hergestellt werden, welches bei beliebigen Parallelogrammträgern zum Einsatz gelangen kann.

Das gilt ebenso für die erstgenannte Variante, bei der aussen am Träger dessen Driftverhalten gemessen wird. Besonders geeignet für die Anwendung im Sinne der Erfindung ist ein Scherkraftsensor, der an der unterbrochenen oder geschwächten Stelle des Tragarms, bzw. zwischen dem Tragarm und einer Abstützung montiert ist. Die Verwendung eines Scherkraftsensors ist insofern vorteilhaft, als dieser für andere Zwecke in grossen Stückzahlen hergestellt wird und somit äusserst preisgünstig zum Einsatz gelangen kann.

Der Zustand, in dem die Unbalancekräfte in einem Tragarm eines Parallelogrammträger am besten gemessen werden können, ist derjenige, bei dem wenigstens ein Gelenk des Parallelogrammträgers eingebremst ist, bzw. bei dem die oben erwähnte Abstützung eingebremst ist, der Tragarm selbst jedoch geringfügig driften kann. Insbesondere dann, wenn der dann u.U. als Knicksensor arbeitende Sensor in der Nähe der Bremse angeordnet ist, können im eingebremsten Zustand die Unbalancen mit guter Messgenauigkeit gemessen werden.

Des Weiteren hat sich die Anwendung einer Plattform-Wägezelle als besonders preisgünstig herausgestellt.

In einer weiteren Ausgestaltung der Erfindung wird im Betrieb der Abruf der Sensordaten durch einen Computer gesteuert, wobei im Betriebszustand die Sensorausgangsdaten einer automatischen Balanciereinrichtung zugeführt werden.

Außerdem kann es vorgesehen sein, dass eine an einem Seilzug hängende Masse als Ausgleichsgewicht vorgesehen ist und der Seilzug an einem elektromotorisch verschiebbaren Gleitschuh an einem Ausgleichsarm befestigt ist.

In einer weiteren Ausgestaltung der Erfindung werden dem Sensor umgreifende Elemente zugeordnet, die bei Überlast eine Stützfunktion übernehmen.

Die Erfindung kann mit Vorteil bei einem neuen Stativ entsprechend den am gleichen Tag eingereichten Gebrauchsmusteranmeldungen DE 200 19 105, DE 200 19 109 und DE 200 19 107 der Anmelderin zum Einsatz gelangen.

Anhand der Figurenbeschreibung wird die vorliegende Erfindung beispielhaft näher erläutert. Es zeigen dabei:
- Fig.1 -: eine schematische Darstellung eines Parallelogrammträgers mit eingebautem Messsensor und Bremse;
- Fig.2 -: die mechanische Ausbildung einer erfindungsgemäss verwendbaren Plattform-Wägezelle;
- Fig.2a -: die schematische Anwendung einer solchen Plattform-Wägezelle;
- Fig.3 -: den Aufbau eines Parallelogrammträgers in bevorzugter Ausgestaltung für ein Operationsmikroskop-Stativ, in Seitenansicht;
- Fig.4 -: den unteren Tragarm des Parallelogrammträgers aus Fig.3, in Seitenansicht;
- Fig.5 -: den Tragarm gemäss Fig.3 in Draufsicht;
- Fig.6 -: eine Perspektivansicht des Tragarms aus Fig.3 und 4, mit entfernter Deckplatte beim Sensorbereich;
- Fig.7 -: eine Variante mit einem Kraftmess-, bzw. Dehnungssensor, der erfindungsgemäss als Knicksensor eingesetzt ist;
- Fig.8 -: eine Variante zur Ausführung gemäss Fig.7;
- Fig.9 -: einen schematischen erfindungsgemässen Stativaufbau;
- Fig.10 -: einen schematischen Gesamtaufbau eines erfindungsgemässen Stativs mit zwei Drucksensoren und
- Fig.11 -: einen schematischen Gesamtaufbau eines erfindungsgemässen Stativs mit einem am Tragarm befestigten Scherkraftsensor.

Die Figuren werden übergreifend beschrieben, gleiche Bezugszeichen bedeuten gleiche Bauteile, Bezugszeichen mit gleichen Nummern, jedoch unterschiedlichen Indizes bedeuten geringfügig unterschiedliche Bauteile mit gleichen Aufgaben beziehungsweise ähnlichen Wirkungen.

Die Last G - in der bevorzugten Anwendung ein Operationsmikroskop - hängt mittels nicht näher dargestelltem Schwenkträger (beispielsweise ein Schwenkträger gem. der internationalen Patentanmeldung WO 97/47240 der Anmelderin an einem Stativ. Der Schwenkträger und damit die Last G greift am äussersten unteren Gelenk 58 eines insgesamt mit 2b bezeichneten Parallelogrammträgers an. Der obere Tragarm 59 ist herkömmlich ausgebildet, während der untere Tragarm 60 eine neuartige Ausbildung hat. Im Bereich seiner stativseitigen Anlenkung 61 an eine Basis 12 ist er materialgeschwächt, bzw. unterbrochen ausgebildet.

Ein Basisteil 62 ist über eine Bremse (einbremsbare Kupplung) 63 an der Basis 12 angelenkt. Ein Auf- und Ab-Schwenken des Basisteils 62 kann durch das Aktivieren der Bremse 63 verhindert werden. Mit dem Basisteil 62 ist eine als Plattform-Wägezelle ausgebildete Messeinheit 64 starr verbunden, die an ihrem anderen Ende den Tragarmteil 65 des Tragarmes 60 starr aufnimmt. Die Verbindung zwischen dem Basisteil 62 und dem Tragarmteil 65 über die Messeinheit 64 ist so stabil, dass bei gelöster Bremse 63 der untere Tragarm. 60 parallel zum oberen Tragarm 59 auf und ab schwenken kann.

Im angezogenem Zustand der Bremse 63 tritt jedoch folgendes Phänomen auf:

Im ausbalancierten Zustand, der dann erreicht wird, wenn beispielsweise ein symbolisch angedeutetes Ausgleichsgewicht AGa das zahlengleiche jedoch entgegengesetzte Drehmoment erzeugt, das durch die Last G entsteht, wird der untere Tragarm 60 lediglich auf Druck belastet. Die einzige auf den unteren Tragarm 60 wirksame Kraftkomponente erstreckt sich somit vom Gelenk 58 bis zur Anlenkung 61 entlang seiner Längsachse 66. Der Sensor 64 ist gegenüber Zug-Druck-Belastungen unempfindlich, d.h. es werden aufgrund dieser Kräfte keine Unbalancewerte gemessen.

Im Falle einer Unbalance treten jedoch an der unterbrochenen oder geschwächten Stelle Querkräfte auf, die gemessen werden können. Querkräfte im Rahmen dieser Erfindung entstehen durch Kräfte oder Momente, die schräg oder senkrecht auf die Längserstreckung des - im vorliegenden Beispiel - unteren Tragarms 60 wirken.

Kommt es bei angezogener Bremse 63 jedoch zu einer Erhöhung der Last G, ohne gleichzeitige Veränderung des Ausgleichsgewichts AGa, so führt dies am Sensor 64 zu einer Knick- oder Scherbelastung: Der im balancierten Zustand entlang der Längsachse 66 wirkende Kraftvektor wirkt nun schräg zur Längsachse 66. Da die Bremse 63 jedoch angezogen ist, kommt es am Sensor 64 zu einer Knick- oder Scherkraft, die durch diesen Sensor 64 vorzüglich detektierbar ist.

Wie dem Fachmann geläufig, können derartige detektierten Kräfte elektronisch zur Steuerung eines Ausgleichsgewichtes eingesetzt werden. Da verschiedenste solcher Steuerungen dem Fachmann bekannt sind, beispielsweise im Leica OHS^{(™)} der Anmelderin, sowie bei anderen auf dem Markt befindlichen Stativen mit automatischer oder halbautomatischer Balancierung, wird auf den elektronischen Teil der Erfindung hier nicht mehr näher eingegangen. Entscheidend ist, dass am Sensor 64 dann Kräfte gemessen werden, wenn der Parallelogrammträger 2b in einen unbalancierten Zustand tritt.

Der Basisteil 62 ist ggf. über den grundsätzlichen Bedarf für seine Funktion hinaus mit weiteren Merkmalen ausgestattet, die eine Weiterentwicklung der Erfindung darstellen: Ein oberer Stützarm 67 und ein unterer Stützarm 68 überragen den Sensor 64 und reichen bis zum Tragarmteil 65. Gegenüber diesem haben sie ein mit "x" bezeichnetes Spiel. Dieses Spiel gibt dem Sensor 64 genügend Raum, seine Sensorleistung zu erbringen. Es ist jedoch so klein, dass im Falle einer besonders hohen Last oder Überlast eine Berührung zwischen den Stützteilen 67 oder 68 und dem Tragarmteil 65 auftritt, sich diese gegenseitig abstützen und dadurch eine Beschädigung des Sensors 64 verhindern.

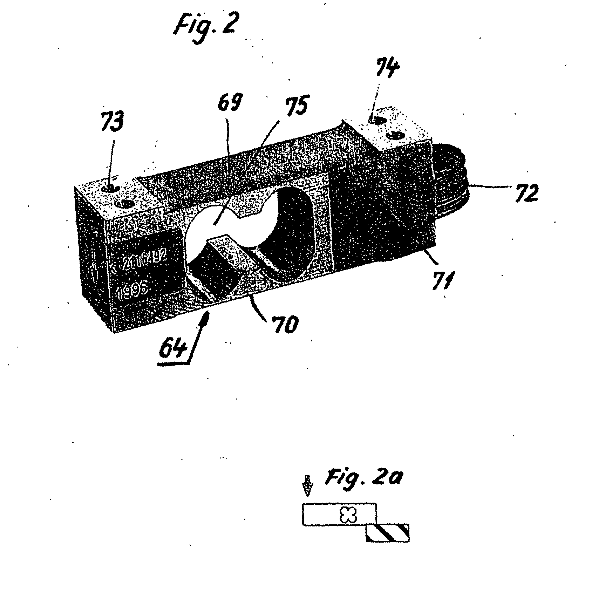

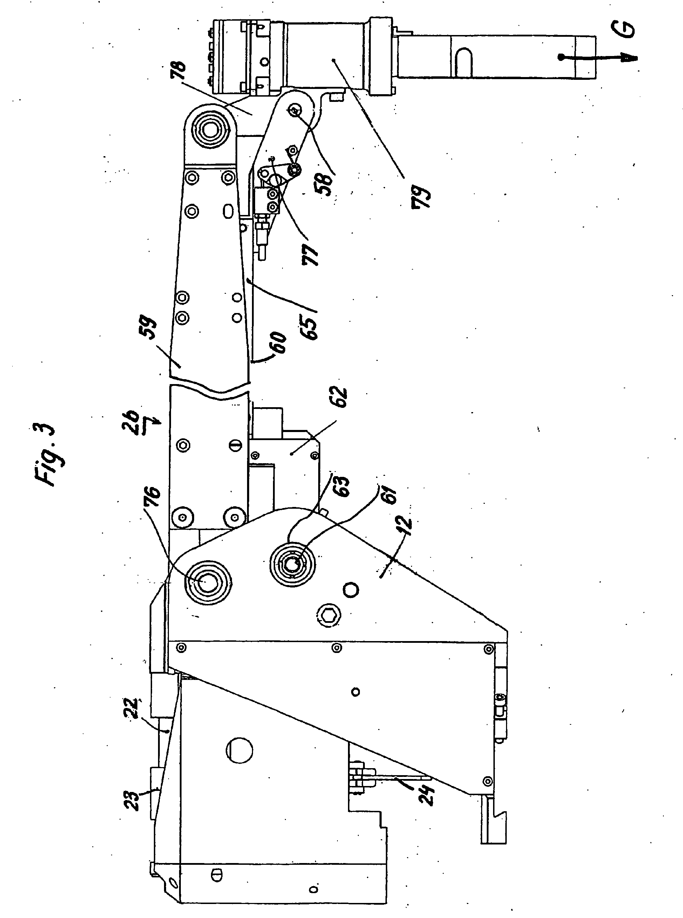

Aus Fig.2 ist die perspektivische Ansicht auf einen erfindungsgemäss eingesetzten Sensor 64 ersichtlich. Er verfügt über Messzonen 69 und/oder 70, eine versiegelte elektronische Schaltung 71 und Anschlusskabel 72. Ein solcher Sensor ist beispielsweise eine PW4F-2 Plattform-Wägezelle der Firma HBM Spectris Group/ Darmstadt (DE).

An beiden Enden des Sensors 64 sind Gewindebohrungen 73 und 74 vorgesehen, um einerseits mit dem Basisteil 62 und andererseits mit dem Tragarmteil 65 verschraubt zu werden. Die zentral angeordnete Doppellanglochausnehmung 75 kann in ihrer Form von Sensor zu Sensor variieren, entspricht jedoch in der gezeigten Form für den vorliegenden Anwendungsfall einer Standardausbildung.

Fig.2a zeigt schematisch die Einspannung bzw. Anwendung einer als Knick- bzw. Scherkraftsensor 64 gewählten Plattform-Wägezelle.

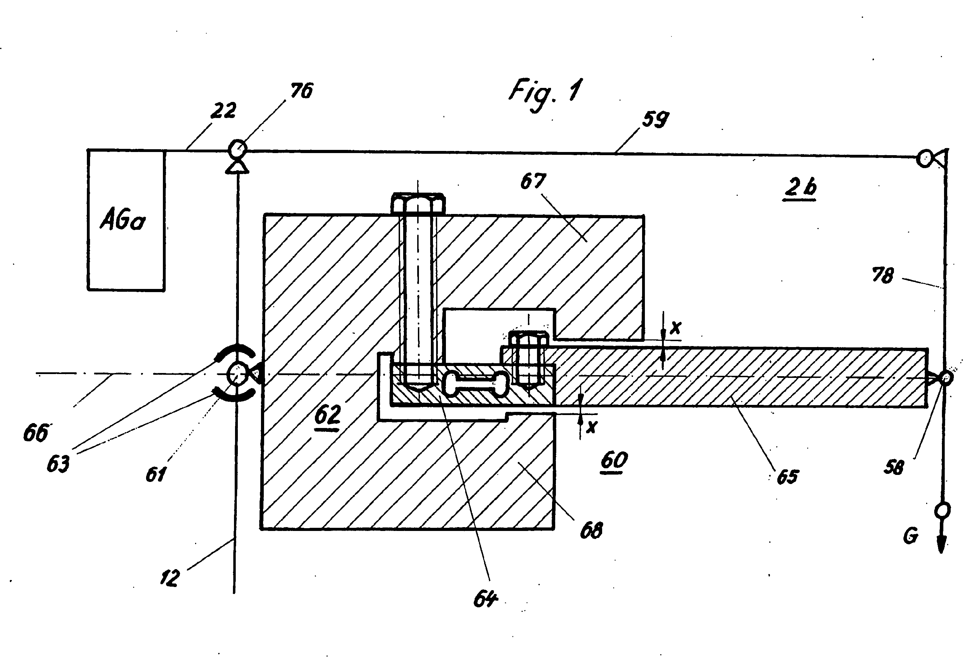

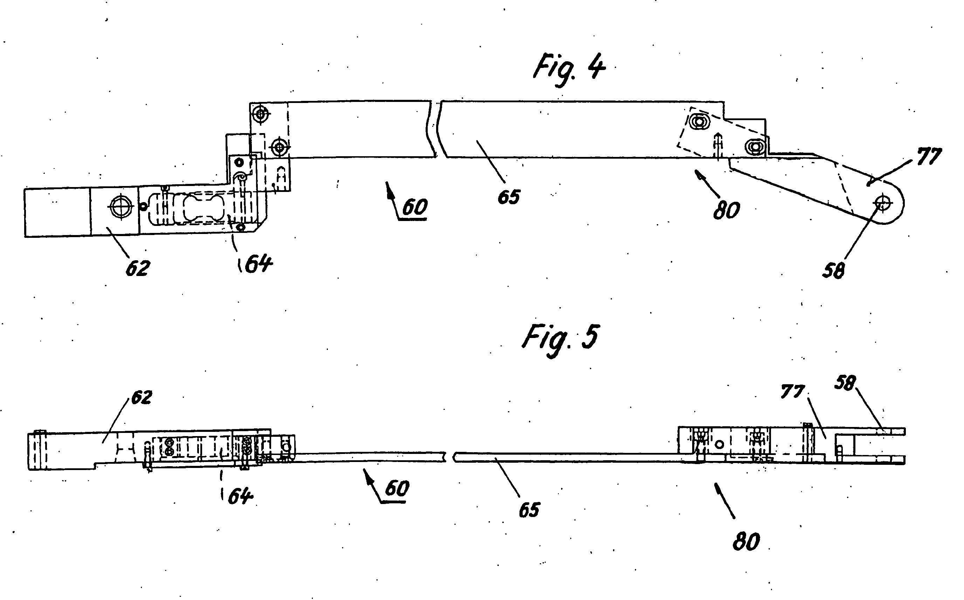

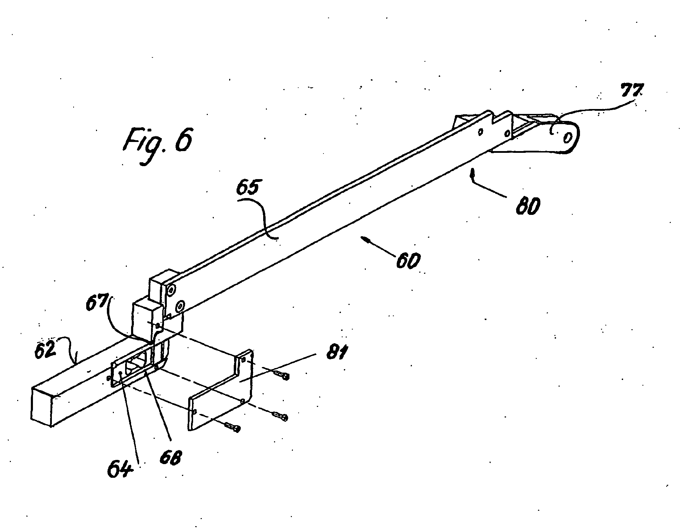

Beim Aufbau gem. Fig.3 ist der Ausleger eines Stativs in seiner waagrechten Ruhestellung dargestellt. An der Basis 12 befindet sich die stativseitige, bremsbare Anlenkung 61 mit Bremse 63 und einem Anlenkpunkt 76 für den oberen Tragarm 59 des Parallelogrammträgers 2b. Dieser ist verschachtelt ausgebildet, sodass man hauptsächlich den oberen Tragarm 59 erkennt, der im Querschnitt U-förmig ausgebildet ist und in seinem Inneren den nach oben gekröpften Teil des unteren Tragarms 60 aufnimmt. Der untere Tragarm 60 ist, wie in Fig.1 schematisch dargestellt, zweigeteilt und umfasst den Tragarmteil 65 und den Basisteil 62, in dem der Sensor 64 gemäss Fig. 6 integriert ist.

Am Anlenkpunkt 58 ist ein Schwenkträger 79 montiert, der die Last G, bzw. ein Operationsmikroskop, aufnimmt.

Der obere Tragarm 59 ist über seinen Anlenkpunkt 76 hinaus verlängert und bildet dort den Ausgleichsarm 22. An diesem ist ein Gleitschuh 23 verschiebbar gelagert, an dem ein Seilzug 24 befestigt ist. Am unteren, nicht dargestellten Bereich des Seilzuges 24 hängt ein Ausgleichsgewicht AGa. Der Gleitschuh 23 ist vorzugsweise elektronisch bzw. elektrisch gesteuert verschiebbar, in Abhängigkeit von den ermittelten Knick- bzw. Scherkräften am Sensor 64 im Basisteil 62.

Bevorzugt ist bei der vorliegenden Erfindung der Ausgleichsbereich; d.h. der Bereich links von den Anlenkstellen 61 und 76 so ausgebildet, wie in der Patentanmeldung DE 200 19 105 und DE 200 19 109 angegeben. Weiter bevorzugt ist, im Falle der Verwendung eines Seilzugs 24, wie in dem Ausführungsbeispiel gem. Fig.3 angegeben, die Anwendung einer Seilsicherung entsprechend der Anmeldung DE 200 19 107.

Auf die Detailausbildung des Schwenkträgers 79 wird im Vorliegenden nicht eingegangen, da sie für die Ausbildung und das Anbringen des Sensors 64 bzw. für die Ausbildung des Parallelogrammträgers 2b ohne wesentliche Bedeutung ist.

Die in den Fig. 4-6 dargestellte Ausbildung des unteren Tragarmes 60 zeigt einen optimal integrierten Basisteil 62 und einen einfachen, lattenförmigen Tragarmteil 65, der optimal von dem U-förmig ausgenommenen oberen Tragarm 59 aufgenommen wird. Der Tragarmteil 65 kann auch aus parallelen Teilträgern oder Formrohren bestehen. Am äusseren Ende des Tragarmteils 65 befindet sich ein verlängertes Armteilstück 77, das gabelförmig ausgebildet ist, zur Aufnahme des senkrechten Tragarms 78 des Parallelogrammträgers 2b und/oder zur Aufnahme des Schwenkträgers 79. An der Stelle 80 kann eine Arretierung zwischen dem oberen Tragarm 59 und dem unteren Tragarm 60 angeordnet sein.

Der Sensor 64 ist durch eine Abdeckung 81 im Basisteil 62 geschützt.

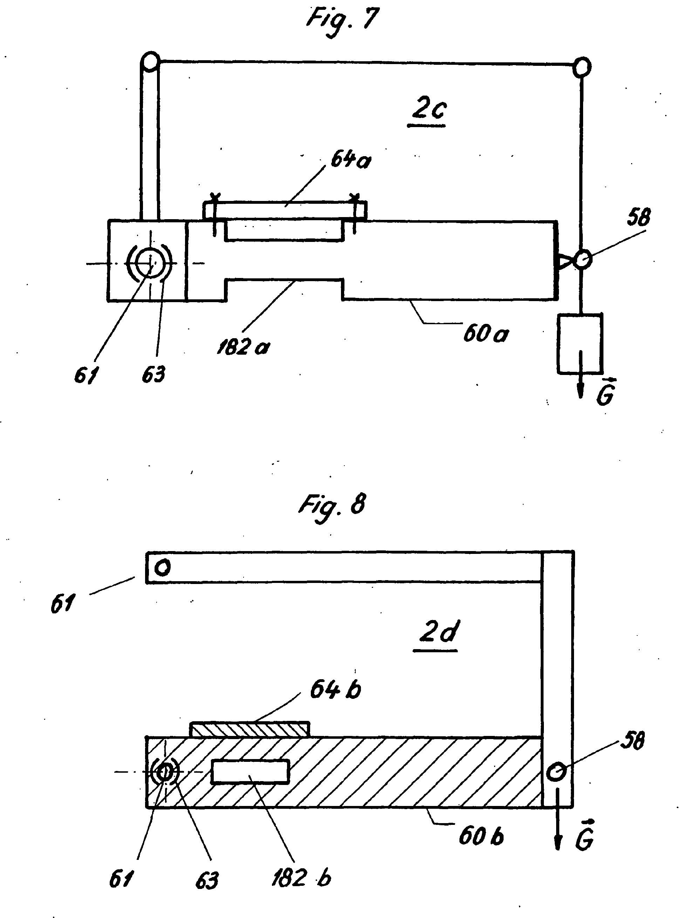

Die Aufbauten gem. Fig.7 und 8 stellen Varianten der Erfindung dar, bei denen anstelle eines Plattform-Wägesensors herkömmliche Knicksensoren 64a und 64b eingesetzt werden. Diese Sensoren befinden sich an Stellen, an denen der untere Tragarm 60a bzw. 60b geschwächt ist. Die an diesen Stellen durch die Sensoren 64a bzw. 64b gemessenen Knickwerte entsprechen den Scherkraftwerten, die mit dem Sensor 64 gemessen werden und erlauben somit ebenso einen Rückschluss auf die Unbalance.

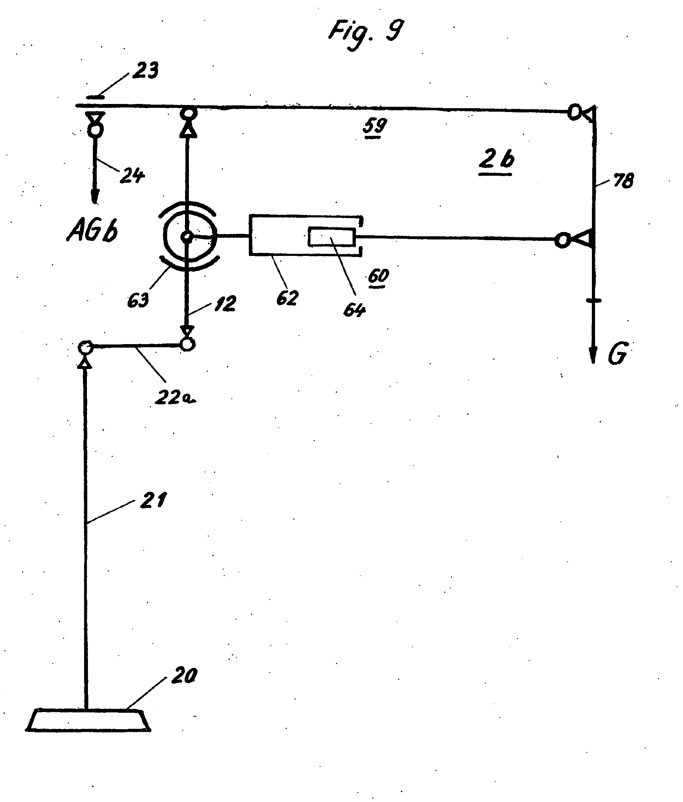

Beim symbolischen Aufbau gem. Fig.9 erkennt man den Stativfuss 20, eine vertikale Ständersäule 21 und einen von ihr abragenden Ausgleichsarm 22a. Dieser Ausgleichsarm 22a ist um die Ständersäule 21 schwenkbar. Er trägt die Basis 12, an dem in der beschriebenen Art und Weise der Parallelogrammträger 2b schwenkbar gelagert ist. Der Seilzug 24 ist nur angedeutet, da die Lastausgleichseinrichtung bevorzugt so wie in der Anmeldung DE 200 19 105 oder alternativ so wie in der Anmeldung DE 200 19 109 bzw. DE 200 19 107 ausgebildet ist.

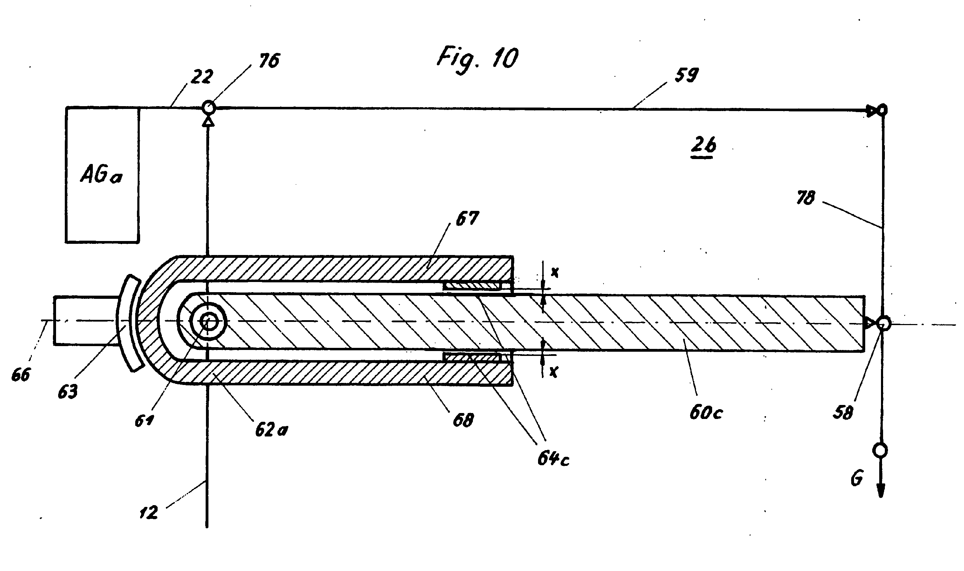

In Fig.10 ist ein schematischer Stativaufbau dargestellt, bei dem der untere Träger als durchgehender Tragarm 60c ausgestaltet ist. Er reicht vom Gelenk 58 bis zur stativseitigen Anlenkung 61, wo nicht nur der Tragarm 60c, sondern auch der im wesentlichen gabelförmig ausgebildete Basisteil 62a schwenkbar gelagert sind. Die Bewegbarkeit des Basisteils 62a kann durch eine Bremse 63 eingebremst werden. Die Beweglichkeit des Tragarms 60c im Anlenkpunkt 61 wird dadurch auf das Spiel x eingeschränkt.

An den Tragarmen 67 und 68 sind Drucksensoren 64c angebracht, die im dargestellten ausbalancierten Zustand (und bei angezogener Bremse 63) gegenüber dem Tragarm 60c das mit "x" bezeichnete Spiel aufweisen. Bei Unbalance tritt um das Gelenk 76 ein Drehmoment auf, welches dazu führt, dass der Tragarm 78 nach oben oder nach unten driftet. Der Tragarm 78 überträgt diese Drift an den Tragarm 60c, so dass das Spiel x bei angezogener Bremse 63 am unteren Drucksensor 64c anwächst oder kleiner wird, während am oberen Drucksensor 64c das Spiel x gegengleich verändert wird. Sobald einer der beiden Sensoren 64c berührt wird, somit eine Druckkraft auftritt, wird diese als Unbalance-Wert gemessen und weitergegeben.

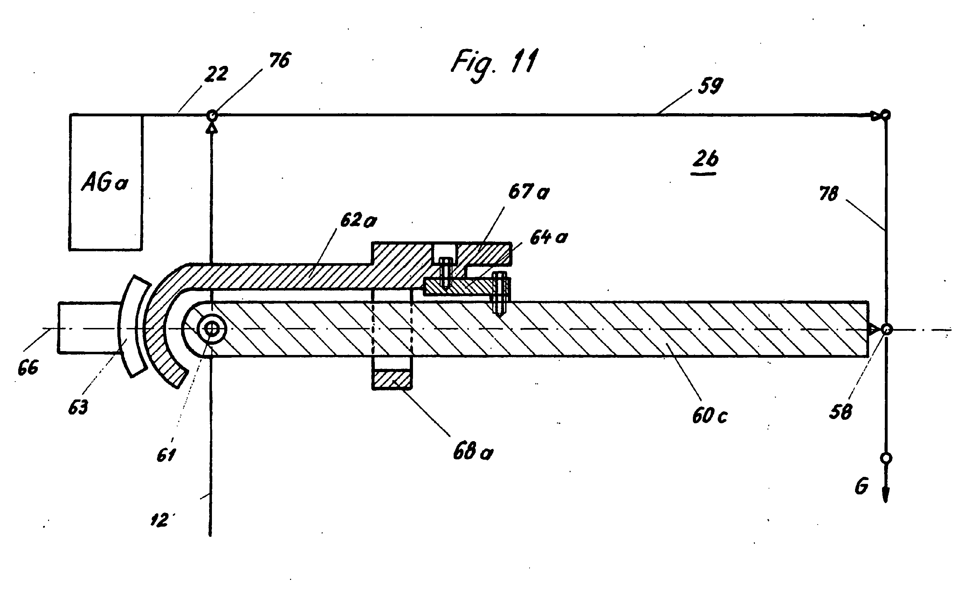

Fig.11 zeigt eine Variante des in Fig.10 dargestellten Aufbaus, bei welcher anstelle der Drucksensoren 64c ein Scherkraftsensor 64a zum Einsatz gelangt. Dieser ist einerseits mit dem einzelnen Tragarm des Basisteils 62a und andererseits mit dem Tragarm 60c fest verbunden und ist in der Lage, bei angezogener Bremse 63 die auftretenden Scherkräfte aufzunehmen und zu detektieren.

Gegenüber dem Aufbau nach Fig.10 entfällt hier das Spiel x. Dieses könnte auch beim Aufbau nach Fig.10 weggelassen werden, was jedoch zu aufwendigen Justiervorgängen bei den beiden Drucksensoren 64c führen müsste.

Analog zum Aufbau nach Fig.1 sind obere und untere Stützarme 67a bzw. 68a vorgesehen, wobei bei dieser Ausführung der untere Stützarm 68a laschenförmig vom Basisteil 62a abragt. Alternativ können diese Teile auch parallel zueinander angeordnet sein und durch Bolzen o.dgl. verbunden sein, wobei die Stützflächen zwischen den Bolzen o.dgl. und Langlöcher, grösseren Bohrungen o.dgl. gebildet werden.

Unter Tragarmen im Sinne der Patentansprüche und der Beschreibung sind sowohl einzelne Tragarme als auch Parallelogrammträger oder ähnliche Konstruktionen zu verstehen.

### Bezugszeichenliste

2b - Parallelogrammträger
12 - Basis bzw. Grundkörper
20 - Stativfuss
21 - Ständersäule
22, 22a - Ausgleichsarm
23 - Gleitschuh
24 - Seilzug
58 - Gelenk
59 - Oberer Tragarm
60 - Unterer Tragarm
60a, b, c - Varianten des unteren Tragarms
61 - Stativseitige Anlenkung (Schwenkachse)
62,a - Basisteil bzw. Messarm
63 - Bremse (Einbremsbare Kupplung)
64 - Messeinheit bzw. Sensor bzw. Plattform-Wägezelle
64a, b - Scherkraftsensor
64c - Drucksensor
65 - Tragarmteil
66 - Achse
67 - Oberer Stützarm
68 - Unterer Stützarm
69, 70 - Messzonen
71 - elektronische Schaltung
72 - Anschlusskabel
73 - Gewindebohrung
74 - Gewindebohrungen
75 - Doppellanglochausnehmung
76 - Anlenkpunkt
77 - Armteilstück
78 - Senkrechter Tragarm
79 - Schwenkträger
80 - Verstellmechanismus
81 - Abdeckung
182a,b - unterbrochene Stelle im Tragarm 60 AG,a - Ausgleichsgewicht
G - Last bzw. Gewicht des Mikroskops

## Patentansprüche

1. Ausbalancierbares Stativ mit einem die Last **(G)** aufnehmenden Parallelogrammträger **(2b)** aus wenigstens drei Tragarmen **(59, 60, 78),** von denen zwei parallele Tragarme **(59, 60)** gegenüber einer Basis **(12)** abgestützt sind, mit einer Messeinheit im Bereich von einem der Tragarme **(60),** wobei die Messeinheit als Sensor **(64)** zur Messung von Kräften ausgebildet ist und im Betriebszustand die Messwerte für die Balanciersteuerung zur Verfügung hält, **dadurch gekennzeichnet, dass** der Sensor **(64)** zwischen einem der beiden horizontalen Tragarme **(60)** und einem eingebremsten Basisteil **(62)** des Stativs die auftretenden Kräfte misst.

2. Stativ nach Anspruch **1, dadurch gekennzeichnet, dass** der Sensor **(64)** zwischen einem der horizontalen Tragarme **(60)** und einem mittels Bremse **(63)** festlegbaren Basisteil **(62)** angeordnet ist.

3. Stativ nach Anspruch **2, dadurch gekennzeichnet, dass** der Basisteil **(62)** parallel zum horizontalen Tragarm **(60)** angeordnet und als Messarm ausgebildet ist, wobei der Messarm mit dem horizontalen Tragarm **(60)** um dieselbe Achse **(61)** schwenkbar und gegenüber der Basis **(12)** einbremsbar ausgebildet ist.

4. Stativ nach Anspruch **2** oder **3, dadurch gekennzeichnet, dass** der Basisteil **(62)** wenigstens teilweise in Serie zum horizontalen Tragarm **(60)** bzw. zu einem Tragarmteil **(65)** angeordnet ist und der Sensor **(64)** als serielles Zwischenglied zwischen dem Basisteil **(62)** und dem horizontalen Tragarm **(60)** bzw. Tragarmteil **(65)** montiert ist.

5. Stativ nach einem der vorhergehenden Ansprüche, **dadurch gekennzeichnet, dass** einer der beiden Tragarme **(60)** eine im Querschnitt verjüngte oder unterbrochene Stelle **(182)** aufweist, an der die Messeinheit zur Detektion von Querbelastungen an dieser Stelle vorgesehen ist.

6. Stativ nach einem der vorhergehenden Ansprüche, **dadurch gekennzeichnet, dass** wenigstens einer der parallelen Tragarme **(60)** an seiner Anlenkstelle **(61)** bremsbar ist.

7. Stativ nach einem der vorhergehenden Ansprüche, **dadurch gekennzeichnet, dass** der Sensor **(64)** als Scherkraft-, Knick- oder Druckkraftsensor ausgebildet ist.

8. Stativ nach einem der vorhergehenden Ansprüche, **dadurch gekennzeichnet, dass** der Sensor **(64)** unmittelbar an oder in einem der parallelen Tragarme **(60)** oder an einer geschwächten oder unterbrochenen Stelle des Tragarms **(60a, 60b)** befestigt ist.

9. Stativ nach einem der vorhergehenden Ansprüche, **dadurch gekennzeichnet, dass** der Sensor **(64)** bei einem der beiden horizontalen Tragarme **(60)** zwei Teile eines verjüngten Tragarms **(60a)** oder eines geschwächten Tragarms **(60b)** überbrückt, wobei der der Basis **(12)** zugewandte Bereich der beiden Teile die Funktion des Messarms übernimmt.

## Claims

1. Balanceable stand having a parallelogram support system **(2b)** receiving the load **(G)** and consisting of at least three support arms **(59, 60, 78),** of which two parallel support arms **(59, 60)** are supported against a base **(12),** comprising a measuring unit in the region of one of the support arms **(60),** the measuring unit being configured as a sensor **(64)** for the measurement of forces and, in the operating state, keeping the measurement values available to the balancing control system, **characterized in that** the sensor **(64)** measures the arising forces between one of the two horizontal support arms **(60)** and a braked base part **(62)** of the stand.

2. Stand according to Claim 1, **characterized in that** the sensor **(64)** is disposed between one of the horizontal support arms **(60)** and a base part **(62)** which is securable by means of a brake **(63).**

3. Stand according to Claim 2, **characterized in that** the base part **(62)** is disposed parallel to the horizontal support arm **(60)** and is configured as a measuring arm, the measuring arm being configured such that it can be pivoted with the horizontal support arm **(60)** about the same axis **(61)** and can be braked relative to the base **(12).**

4. Stand according to Claim 2 or 3, **characterized in that** the base part **(62)** is disposed at least partially in series with the horizontal support arm **(60)** or with a support arm part **(65),** and the sensor **(64)** is mounted as a serial intermediate member between the base part **(62)** and the horizontal support arm **(60)** or support arm part **(65).**

5. Stand according to one of the preceding claims, **characterized in that** one of the two support arms **(60)** has a cross-sectionally narrowed or interrupted portion **(182),** at which there is provided the measuring unit for detecting transverse loads at this location.

6. Stand according to one of the preceding claims, **characterized in that** at least one of the parallel support arms **(60)** can be braked at its pivot point **(61).**

7. Stand according to one of the preceding claims, **characterized in that** the sensor **(64)** is configured as a shearing force, buckling force or compression force sensor.

8. Stand according to one of the preceding claims, **characterized in that** the sensor **(64)** is fastened directly to or in one of the parallel support arms **(60)** or to a weakened or interrupted portion on the support arm **(60a, 60b).**

9. Stand according to one of the preceding claims, **characterized in that** the sensor **(64),** in respect of one of the two horizontal support arms **(60),** bridges two parts of a narrowed support arm **(60a)** or of a weakened support arm **(60b),** the base **(12)**-facing region of the two parts assuming the function of the measuring arm.

## Revendications

1. Pied équilibré comprenant un support à parallélogramme (2b) recevant la charge (G) et composé d'au moins + nois bras porteurs (59, 60, 78) dont deux bras porteurs parallèles (59, 60) sont soutenus par rapport à une base (12), comprenant une unité de mesure dans la zone de l'un des bras porteurs (60), l'unité de mesure étant réalisée sous la forme d'un capteur (64) pour mesurer des forces et, en l'état opérationnel, tenant à disposition les valeurs mesurées pour la commande de l'équilibrage, **caractérisé en ce que** le capteur (64) mesure les forces produites entre l'un des deux bras porteurs horizontaux (60) et une partie de base (62) freinée du pied.

2. Pied selon la revendication 1, **caractérisé en ce que** le capteur (64) est disposé entre l'un des bras porteurs horizontaux (60) et une partie de base (62) pouvant être immobilisée au moyen d'un frein (63).

3. Pied selon la revendication 2, **caractérisé en ce que** la partie de base (62) est disposée parallèlement au bras porteur horizontal (60) et est réalisée sous la forme d'un bras de mesure, le bras de mesure avec le bras porteur horizontal (60) pouvant pivoter autour de l'axe (61) de celui-ci et étant réalisé de manière à pouvoir être freiné par rapport à la base (12).

4. Pied selon la revendication 2 ou 3, **caractérisé en ce que** la partie de base (62) est disposée au moins partiellement en série par rapport au bras porteur horizontal (60) ou à une partie de bras porteur (65) et le capteur (64) est monté en tant qu'élément intermédiaire série entre la partie de base (62) et le bras porteur horizontal (60) ou la partie de bras porteur (65).

5. Pied selon l'une des revendications précédentes, **caractérisé en ce que** l'un des deux bras porteurs (60) présente un endroit (182) en section transversale rétréci ou interrompu auquel est prévue l'unité de mesure destinée à la détection des contraintes transversales à cet endroit.

6. Pied selon l'une des revendications précédentes, **caractérisé en ce qu'**au moins l'un des bras porteurs parallèles (60) peut être freiné au niveau de son point d'articulation (61).

7. Pied selon l'une des revendications précédentes, **caractérisé en ce que** le capteur (64) est réalisé sous la forme d'un capteur de force de cisaillement, de force de flambage ou de force de compression.

8. Pied selon l'une des revendications précédentes, **caractérisé en ce que** le capteur (64) est fixé directement sur ou dans l'un des bras porteurs parallèles (60) ou en un endroit fragilisé ou interrompu du bras porteur (60a, 60b).

9. Pied selon l'une des revendications précédentes, **caractérisé en ce que** le capteur (64) enjambe deux parties d'un bras porteur rétréci (60a) ou d'un bras porteur fragilisé (60b) au niveau de l'un des deux bras porteurs horizontaux (60), la zone des deux parties qui fait face à la base (12) remplissant la fonction de bras de mesure.
